# EUROPEAN PATENT SPECIFICATION

(11) **EP 3 034 636 B1**
(45) Date of publication and mention of the grant of the patent: **19.06.2019**
(21) Application number: 14836406.0
(22) Date of filing: 13.08.2014
(51) Int. Cl.: C22B 59/00, C22B 3/08, C22B 3/26

(54) **METHOD FOR PROCESSING LATERITE-NICKEL ORE AND METHOD FOR RECYCLING SCANDIUM**
VERFAHREN ZUR VERARBEITUNG VON LATERIT-NICKELERZ UND RECYCLING-VERFAHREN FÜR SCANDIUM
PROCÉDÉ DE TRAITEMENT DE MINERAI DE LATÉRITE-NICKEL ET PROCÉDÉ DE RECYCLAGE DE SCANDIUM

(30) Priority: 15.08.2013 CN 201310356929; 15.08.2013 CN 201310356852
(43) Date of publication of application: 22.06.2016
(60) Divisional application: 18214302.4
(73) Proprietor: China Enfi Engineering Corp., Beijing 100038 (CN)
(72) Inventor: WANG, Weiwei, Beijing 100038 (CN); LV, Dong, Beijing 100038 (CN); XU, Yuehe, Beijing 100038 (CN); QIN, Bo, Beijing 100038 (CN); DU, Guoshan, Beijing 100038 (CN); ZHOU, Wenlong, Beijing 100038 (CN); LI, Shaohua, Beijing 100038 (CN); QIU, Shuang, Beijing 100038 (CN)
(74) Representative: Maiwald Patent- und Rechtsanwaltsgesellschaft mbH
(86) International application number: PCT/CN2014/084300
(87) International publication number: WO 2015/021926

(56) References cited:
- EP-A1- 0 775 753
- CN-A- 102 021 343
- CN-A- 102 268 552
- CN-A- 102 876 892
- CN-A- 103 468 948
- CN-A- 103 468 949
- CN-A- 103 468 972
- CN-A- 103 468 978
- CN-A- 103 468 979
- CN-A- 103 468 980
- CN-A- 103 484 695
- DE-C2- 19 858 560
- US-A1- 2012 204 680
- US-A1- 2012 204 680
- US-A1- 2012 207 656
- WEIWEI WANG ET AL: "Metallurgical processes for scandium recovery from various resources: A review", HYDROMETALLURGY, ELSEVIER SCIENTIFIC PUBLISHING CY. AMSTERDAM, NL, vol. 108, no. 1, 5 March 2011 (2011-03-05) , pages 100-108, XP028201019, ISSN: 0304-386X, DOI: 10.1016/J.HYDROMET.2011.03.001 [retrieved on 2011-03-17]

## Description

The present disclosure relates to the field of metallurgy, in particular to a method for recycling scandium.

### BACKGROUND

Laterite nickel ores contain a high content of nickel and cobalt. Most of raw laterite nickel ores used to produce the nickel and cobalt are imported in China, because of the low nickel and cobalt grades in original laterite nickel ores, which result in the high cost of the raw materials. In the past, the ores were mainly used for extracting nickel and cobalt metals, but other valuable metallic elements with small quantity in the ores were neglected. In this patent application, a valuable metal element scandium with a low content is found to be contained in the ores. However, the scandium extraction is difficult and its recovery ratio is low, resulting from the low content of scandium in the ores. The contents of impurities such as iron, aluminum, manganese and calcium in the ores are much higher than the content of scandium, so that the extraction of scandium is easy to be disturbed. The current scandium extracting technology has such disadvantages as long process, complex operation, low yield, high consumption of raw and auxiliary materials and high cost, so it is not industrially applicable for the extraction of scandium from the ores. Therefore, based on above findings, we finally completed the present disclosure by research on the method extracting scandium from the ores. The present disclosure has developed a new concept for the improvement of the availability of laterite nickel ores and the reduction of the cost of raw materials, and offered a new source for the extraction of scandium.

A method for extracting scandium by means of solvent extraction is known from US2012/0204680 or CN 102 268 552.

### SUMMARY

The present disclosure aims to solve at least one of the above technical problems to some extent or to offer at least one available commercial choice. Therefore, objects of the present disclosure are to provide a method for recycling scandium.

The present invention provides a method for recycling scandium as defined in claims 1 to 5.

This method comprises extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein the scandium-containing leachate is obtained as defined in the individual embodiments further below.

Thus, scandium may be extracted from the scandium-containing solution in effective and selective manner through the method according to embodiments of the present disclosure as further defined below, which is of a high selection and recycling rate.

According to embodiments of the present disclosure, the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution;
subjecting the first post-Fe-Al-precipitated solution to nickel-cobalt (Ni-Co) precipitation, so as to obtain a Ni-Co hydroxide precipitate; and
subjecting the Ni-Co hydroxide precipitate to third leaching, so as to obtain the scandium-containing leachate.

It may enrich most scandium into the Ni-Co hydroxide precipitate or the first Fe-Al slag selectively, i.e., enrich scandium into part of precipitants in advance, so as to save extractant and stripping agents during recycling step, thereby to reduce operating cost.

According to embodiments of the present disclosure, the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution; and
subjecting the first Fe-Al slag to second leaching, so as to obtain the scandium-containing leachate.

It may enrich most scandium into the Ni-Co hydroxide precipitate or the first Fe-Al slag selectively, i.e., enrich scandium into part of precipitants in advance, so as to save extractant and stripping agents during recycling step, thereby to reduce operating cost.

According to embodiments of the present disclosure, the scandium-containing leachate is obtained by steps of:
subjecting a laterite-nickel ore to first leaching, so as to obtain a first leachate;
subjecting the first leachate to first iron-aluminum (Fe-Al) precipitation and nickel-cobalt (Ni-Co) precipitation, so as to obtain a first Fe-Al slag and a Ni-Co hydroxide precipitate; and
subjecting the first Fe-Al slag and the Ni-Co hydroxide precipitate to fourth leaching, so as to obtain the scandium-containing leachate.

Therefore, most scandium is enriched into precipitants in the beginning, so that it may save the consumption of extractant and stripping agent, thereby to reduce operating cost; and as scandium is recycled from both Fe-Al slag and Ni-Co hydroxide precipitate, it may improve efficiency of recycling.

According to embodiments of the present disclosure, the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution;
subjecting the first post-Fe-Al-precipitated solution to nickel-cobalt (Ni-Co) precipitation, so as to obtain a Ni-Co hydroxide precipitate;
subjecting the Ni-Co hydroxide precipitate to third leaching, so as to obtain a leachate containing nickel and cobalt;
subjecting the leachate containing nickel and cobalt to second iron-aluminum (Fe-Al) precipitation, so as to obtain a second Fe-Al slag; and
subjecting the second Fe-Al slag to fifth leaching, so as to obtain the scandium-containing leachate.

Therefore, a Ni-Co product being of a higher purity is obtained. Further, scandium is also recycled from the second Fe-Al slag, so that the efficiency of recycling scandium is improved.

According to embodiments of the present disclosure, the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution;
subjecting the first post-Fe-Al-precipitated solution to nickel-cobalt (Ni-Co) precipitation, so as to obtain a Ni-Co hydroxide precipitate;
subjecting the Ni-Co hydroxide precipitate to third leaching, so as to obtain a leachate containing nickel and cobalt;
subjecting the leachate containing nickel and cobalt to second iron-aluminum (Fe-Al) precipitation, so as to obtain a second Fe-Al slag; and
subjecting the first and second Fe-Al slags to sixth leaching, so as to obtain the scandium-containing leachate.

Therefore, a Ni-Co product being of a higher purity is obtained. Further, scandium is also recycled from the first and second Fe-Al slags, so that the efficiency of recycling scandium is improved.

According to preferred embodiments of the present disclosure, the organic extractant is at least one selected from an organic phosphoric acid extractant, a neutral phosphorus extractant, an organic carboxylic acid extractant, an organic amine extractant and an organic chelate extractant, thereby improve the efficiency of extracting scandium further.

According to preferred embodiments of the present disclosure, the organic phosphoric acid extractant is at least one of bis(2-ethylhexyl) phosphoric acid (P204) and bis(2,4,4-trimethyl pentyl) phosphinic acid (Cyanex272); the neutral phosphorus extractant is tributyl phosphate (TBP); the organic carboxylic acid extractant is at least one selected from naphthenic acid or 2-octylphenoxy acetic acid (CA12); the organic amine extractant is 3-octyl tertiary amine (N235); and the organic chelate extractant is N,N-bis(1- heptyl methyl) acetamide (N503), thereby improve the efficiency of extracting scandium further.

According preferred embodiments of the present disclosure, the monovalent acid is hydrochloric acid or nitric acid.

According preferred to embodiments of the present disclosure, the monovalent acid is of a concentration of 0.01 mol/L to 5 mol/L, thereby improve the efficiency of extracting scandium further.

According to preferred embodiments of the present disclosure, the precipitant is at least one selected from: sodium hydroxide, ammonium hydroxide, sodium carbonate, sodium bicarbonate and oxalic acid; and the precipitant is of a concentration of 0.1 mol/L to 5 mol/L, thereby improve the efficiency of extracting scandium further.

According to preferred embodiments of the present disclosure, the scandium-containing precipitate is calcined for 1 h to 6 h at a temperature of 700 degrees Celsius to 900 degrees Celsius, thereby enhance yield of scandium further.

According to preferred embodiments of the present disclosure, prior to the step of third leaching, the Ni-Co hydroxide precipitate is subjected to pulping, so as to obtain a Ni-Co hydroxide pulp and subject the Ni-Co hydroxide pulp to the third leaching, thereby improve efficiency of leaching further, and improve efficiency of processing the laterite-nickel ore.

According to preferred embodiments of the present disclosure, the Ni-Co hydroxide pulp is of a solid-to-liquid ratio of (1:20) to (1:1), so that it is convenient to perform extraction, thereby to enhance yield of nickel, cobalt and scandium.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:

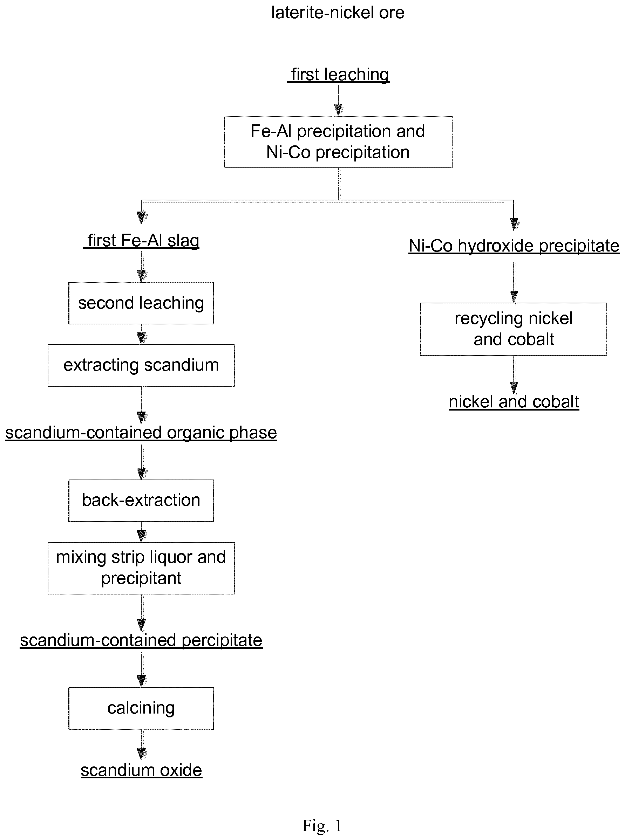

Fig.1 is a flow chart showing a method for processing a laterite-nickel ore; and
Fig.2 is a flow chart showing a method or recycling scandium according to an embodiment of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of" means two or more than two this features, unless specified otherwise.

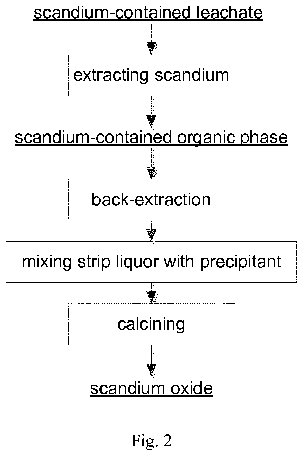

In an aspect, the present disclosure provides a method for recycling scandium. Such method is described in details below referring to Fig.2. The method includes steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein the scandium-containing leachate is obtained as defined in the individual embodiments herein.

Thus, scandium may be extracted from the scandium-containing solution in effective and selective manners through the method according to embodiments of the present disclosure, which is of a high selection and recycling rate.

For the first step, according to examples of the present disclosure, scandium is extracted from scandium-containing leachate with an organic extractant, so as to obtain a scandium-containing organic phase. According to an example of the present disclosure, the organic extractant is not restricted especially in any type. According to exmaples of the present disclosure, the organic extractant may be at least one selected from organic phosphoric acid extractant, neutral phosphorus extractant, organic carboxylic acid extractant, organic amine extractant and organic chelate extractant, thereby improve the efficiency of extracting scandium further. It has been found by the inventor through repeated experiments that all of bis-(2-ethylhexyl) phosphoric acid (P204) and bis-(2,4,4-trimethyl pentyl) phosphinic acid (Cyanex272) in the organic phosphoric acid extractant; tributyl phosphate (TBP) in the neutral phosphorus extractant; naphthenic acid or 2-octylphenoxy acetic acid (CA12) in the organic carboxylic acid extractant; 3-octyl tertiary amine (N235) in the organic amine extractant and N503 (N,N-bis(1- heptyl methyl) acetamide) in the organic chelate extractant are in favor of extracting scandium. According to examples of the present disclosure, the bis-(2-ethylhexyl) phosphoric acid (P204) shows a better effect in extracting scandium, as comparing with (2-ethylhexyl)-2- ethylhexyl phosphate (P507), an extractant in the same category.

For the follow-up steps, according to examples of the present disclosure, the scandium-containing organic phase is subjected to back-extraction with a monovalent acid, so as to obtain a strip liquor; mixing the strip liquor with a precipitant, so as to obtain a scandium-containing precipitate; and calcining the scandium-containing precipitate, so as to obtain scandium oxide, thereby to effectively extract scandium from the scandium-containing organic phase. According to examples of the present disclosure, the monovalent acid may be a hydrochloric acid or nitric acid. According to an example of the present disclosure, the monovalent acid is of a concentration not restricted specially According to examples of the present disclosure; the monovalent acid is of the concentration of 0.01mol/L to 5 mol/L. Meanwhile, it may be controlled that 1 L to 10 L of the hydrochloric acid being of a concentration of 1 mol/L is added into 1 L of the first or second scandium-containing organic phase, so that the efficiency of extracting scandium may be further improved. According to examples of the present disclosure, the strip liquor is precipitated using a precipitant, according to an example of the present disclosure, the precipitant is at least one selected from sodium hydroxide, ammonium hydroxide, sodium carbonate, sodium bicarbonate and oxalic acid, thereby improve precipitation efficiency further. According to an example of the present disclosure, the strip liquor is precipitated with an oxalic acid, so as obtain the scandium-containing precipitate. The oxalic acid is of a concentration not restricted specially, according to examples of the present disclosure, the first or second strip liquor is precipitated by the oxalic acid being of a concentration of 0.1 mol/L to 5 mol/L, and of a volume which may be adjusted in light of the used concentration accordingly. For example, 1.5L of the oxalic acid being of a concentration of 2 mol/L is added into 1 L of the first or second strip liquor, so that the efficiency of extracting scandium may be further improved. According to examples of the present disclosure, the first or second scandium-containing precipitate may be further calcined to obtain scandium oxide, so as to effectively remove other impurities in the first or second scandium-containing precipitate, thereby to further improve purity of obtained scandium.

According to examples of the present disclosure, the scandium-containing precipitate is further calcined, so as to obtain scandium oxide, thereby to effectively remove other impurities from the precipitate and further improve purity of the scandium product. According to examples of the present disclosure, the calcining step is controlled by adjusting temperature and duration. According to examples of the present disclosure, in light of physical and chemical properties of scandium, the scandium-containing precipitate is calcined for 1 h to 6 h at a temperature of 700 degrees Celsius to 900 degrees Celsius, so as to remove other impurities from the precipitate to the maximum extent, thereby to further improve the purity of scandium oxide.

According to an example of the present disclosure, the scandium-containing leachate is obtained by steps of: subjecting a laterite-nickel ore to first leaching, so as to obtain first leachate; subjecting the first leachate to first iron-aluminum (Fe-Al) precipitation, so as to obtain a first Fe-Al slag and a first post-Fe-Al-precipitated solution; subjecting the first post-Fe-Al-precipitated solution to nickel-cobalt (Ni-Co) precipitation, so as to obtain a Ni-Co hydroxide precipitate; and subjecting the Ni-Co hydroxide precipitate to third leaching, so as to obtain leachate containing scandium. In such method according to the present example, because scandium is of a low concentration in the first post-Fe-Al-precipitated solution as compared to that of nickel and cobalt, then it is difficult to precipitate scandium therefrom individually. However, effect of precipitating scandium may be improved through co-precipitating scandium with nickel and cobalt, so that it may reduce individual operation of filtering the scandium-containing precipitate, increase efficiency of recycling nickel and cobalt, reduce consumption of the precipitant and save operating cost, as compared with precipitating nickel, cobalt and scandium, respectively. Therefore, it may enrich most scandium into the Ni-Co hydroxide precipitate selectively, i.e., enrich scandium into part of precipitants in advance, so as to save extractant and stripping agents during recycling step significantly, thereby to reduce operating cost.

According to an example of the present disclosure, the scandium-containing leachate is obtained by steps of: subjecting the first Fe-Al slag (obtained in the previous example) to second leaching, so as to obtain leachate containing scandium. In such method according to the present example, because scandium is of a low concentration in the first leachate as compared to that of iron and aluminum, then it is difficult to precipitate scandium therefrom individually. However, effect of precipitating scandium may be improved through co-precipitating scandium with iron and aluminum, so that all of scandium, iron and aluminum are enriched into the precipitate, which may remove scandium, iron and aluminum from the first leachate simultaneously and purify the first leachate (in the view of recycling nickel and cobalt), thereby to simplify a process for purifying a solution. It may further purify the first post-Fe-Al-precipitated solution and recycle scandium from the second leachate. According to the present example of the present disclosure, scandium is selectively enriched into the first Fe-Al slag through the step of subjecting the first leachate to first iron-aluminum (Fe-Al) precipitation. According to the present example, the first Fe-Al slag is subjected to second leaching, so as to obtain leachate containing scandium; and scandium is recycled from the leachate containing scandium, so that it may significantly save the extractant and the stripping agent consumed for recycling scandium, thereby the operating cost is reduced.

According to an example of the present disclosure, the scandium-containing leachate is obtained by steps of: subjecting a laterite-nickel ore to first leaching, so as to obtain first leachate; subjecting the first leachate to first iron-aluminum (Fe-Al) precipitation and nickel-cobalt (Ni-Co) precipitation, so as to obtain a first Fe-Al slag and Ni-Co hydroxide precipitate; and subjecting the first Fe-Al slag and the Ni-Co hydroxide precipitate to fourth leaching, so as to obtain leachate containing scandium. In the present example, it may enrich most scandium into precipitates, thereby to decrease an amount of acid solution used in the fourth leaching, so that scandium is of a high content in the precipitates and a low content in the leachate containing scandium, which may reduce consumption of the extractant and the stripping agent for recycling scandium, thereby the operating cost is reduced. In addition, as scandium is recycled from both the Fe-Al slag and the Ni-Co hydroxide prepitate, the efficiency of recycling scandium is improved.

According to an example of the present disclosure, the scandium-containing leachate is obtained by steps of: subjecting a laterite-nickel ore to first leaching, so as to obtain first leachate; subjecting the first leachate to first iron-aluminum (Fe-Al) precipitation, so as to obtain a first Fe-Al slag and a first post-Fe-Al-precipitated solution; subjecting the first post-Fe-Al-precipitated solution to nickel-cobalt (Ni-Co) precipitation, so as to obtain a Ni-Co hydroxide precipitate; subjecting the Ni-Co hydroxide precipitate to third leaching, so as to obtain leachate containing nickel and cobalt; subjecting the leachate containing nickel and cobalt to second iron-aluminum (Fe-Al) precipitation, so as to obtain a second Fe-Al slag; and subjecting the second Fe-Al slag to fifth leaching, so as to obtain leachate containing scandium. In the present example, the Ni-Co hydroxide precipitate is subjected to third leaching and the second iron-aluminum (Fe-Al) precipitation, thereby to further improve the purity of the Ni-Co product. In addition, scandium is also recycled from the second Fe-Al slag, thereby the efficiency of recycling scandium is improved further.

According to an example of the present disclosure, the scandium-containing is obtained by steps of: leachate subjecting a laterite-nickel ore to first leaching, so as to obtain first leachate; subjecting the first leachate to first iron-aluminum (Fe-Al) precipitation, so as to obtain a first Fe-Al slag and a first post-Fe-Al-precipitated solution; subjecting the first post-Fe-Al-precipitated solution to a nickel-cobalt (Ni-Co) precipitation, so as to obtain a Ni-Co hydroxide precipitate; subjecting the Ni-Co hydroxide precipitate to third leaching, so as to obtain leachate containing nickel and cobalt; subjecting the leachate containing nickel and cobalt to second iron-aluminum (Fe-Al) precipitation, so as to obtain a second Fe-Al slag; and subjecting the first and second Fe-Al slags to sixth leaching, so as to obtain leachate containing scandium. In the present example, the iron-aluminum (Fe-Al) precipitation is conducted with the first leachate and the leachate containing nickel and cobalt, respectively, so that the purity of the Ni-Co product may be improved further. Besides, both the first and second Fe-Al slag are recycled, so as to improve the efficiency of recycling scandium further.

The method for recycling scandium according to the above examples of the present disclosure may effectively recycle scandium from the laterite-nickel ore through a plurality of leaching, thereby to enrich scandium from the laterite-nickel ore to different extents, and improve the efficiency of recycling scandium.

The present disclosure will be described in details below in conjunction with specific examples. It would be appreciated that these examples are merely for description, but not intended to limit the present disclosure in any way.

### Example 1

A laterite-nickel ore is of a composition shown as Table 1, in which scandium is of a content of 0.0033%.

**Table 1 Contents of elements in the laterite-nickel ore and their concentrations in the acidic leachate under the high pressure**

| Elements | Contents in the laterite-nickel ore (%) | Concentrations in acidic leachate (g/L) |
|---|---|---|
| Ni | 1.07 | 3.85 |
| Co | 0.1 | 0.32 |
| Cu | <0.02 | 0.01 |
| Fe | 41.9 | 1.32 |
| Mn | 0.653 | 2.05 |
| Zn | 〈0.05 | 0.11 |
| Pb | 〈0.02 | <0.001 |
| Si | 7.15 | 0.094 |
| Al | 1.83 | 1.69 |
| Ca | 0.157 | 0.14 |
| Mg | 1.98 | 3.59 |
| Cr | 0.5 | 0.022 |
| Sc | 0.0033 | 0.0117 |

The laterite-nickel ore was subjected to leaching with a sulfuric acid in an autoclave at a temperature of 255 degrees Celsius and a pressure of 5 Mp. A Most valuable metals such as scandium (0.0117g/L), nickel (3.85 g/L) and cobalt (0.32 g/L) were dissolved into an acidic leachate under the high pressure; however, most iron (∼97%) remained in a stable form of hematite and existed in leaching tailings, so that most iron were separated and removed. The acidic leachate under the high pressure was of an iron content of 0.93 g/L.

The acidic leachate was adjusted to be of a pH value of 4.0 by adding sodium hydroxide at a temperature of 70 degrees Celsius, to obtain a Fe-Al slag which was filtered out thereafter, so that most Fe-Al impurities were separated and removed. Further, a post-Fe-Al-precipitated solution was added with the alkali solution to be of a pH value of 7.5, so as to obtain a precipitant of Ni-Co hydroxide after filtered. The Ni-Co hydroxide precipitate was of a scandium content of 0.075%, 22.7 times of that in the laterite-nickel ore, so that scandium was concentrated.

**Table 2 Contents of main elements in the Ni-Co hydroxide precipitate**

| Contents of main elements in the Ni-Co hydroxide precipitate (%) | | | | | | | | |
|---|---|---|---|---|---|---|---|---|
| Sc | Ni | Co | Fe | Mn | Al | Ca | Mg | Cr |
| 0.075 | 41.1 | 4.2 | 0.407 | 7.2 | 0.11 | 0.543 | 0.513 | <0.005 |

The above Ni-Co hydroxide precipitate was added with a 20% (mass ratio) sulfuric acid at a solid-to-liquid ratio (S:L) of 1:10, so as to obtain third leachate after stirring, reacting, third leaching and filtering. The third leachate included Ni, Co, Mn, Ca, Mg, Sc, Fe and Al.

The above third leachate containing Ni, Co, Mn, Ca, Mg, Sc, Fe and Al was adjusted to be of a pH value of 0.2, and then added with 10% Cyanex72 (a sulfonated kerosene solution) at an aqueous phase/organic phase ratio of 10:1. Scandium was of an extraction percentage of 99.9%, Ni, Co, Fe and Al were of extraction percentages of 0.05%, 0.1%, 0.3% and 0%, respectively. Thus, impurities were separated from scandium due to their low extraction percentages. A small amount of Fe, Ni and Co extracted were washed off from the loaded organic phase, while Sc was reserved in the organic phase by means of performing 2-stage washing with 10% sulfuric acid at an aqueous phase/organic phase ratio of 2:1. Therefore, scandium was separated from impurities and enriched into the organic phase. A strip liquor containing scandium was obtained by adding 0.5M HCl into the scandium-containing organic phase after purified at an aqueous phase/organic phase ratio of 1:5 for 5-stage back-extraction.

The strip liquor containing scandium was added with 2 mol/L of oxalic acid to precipitate scandium as scandium oxalate. The precipitate was calcined for 2 hours at a temperature of 800 degrees Celsius after filtered, thereby scandium oxide with a purity of 99.9% was obtained.

Raffinate obtained after the step of extracting scandium was a purified solution containing nickel and cobalt without scandium, which can be used for producing metals of nickel and cobalt by extraction and separation with a solvent, electrolysis or other refining method.

### Example 2

The Ni-Co hydroxide precipitate, of which contents of main elements are listed in Table 2, was subjected to third leaching by adding 20% (mass ratio) sulfuric acid solution therein at a solid-to-liquid ratio (S: L) of 1: 5, so as to third leachate after stirring, reacting, leaching. The third leachate mainly contained Ni, Co, Mn, Sc, Fe, Al and Ca.

The above third leachate containing Ni, Co, Mn, Ca, Mg, Sc, Fe and Al was adjusted to be of a pH value of 0.5, and then added with a kerosene solution containing 10% of N235 (3-octyl tertiary amine) and 5% of N503 (N,N 2-(1- heptyl methyl) acetamide) at an aqueous phase/organic phase ratio of 5:1. Scandium was of an extraction percentage of 99.8%, Ni, Co, Fe and Al were of extraction percentages of 0.1%, 0.2%, 1.0% and 0.2%, respectively. Thus, impurities were separated from scandium due to their low extraction percentages. A small amount of Fe, Ni and Co extracted were washed off from the loaded organic phase, while Sc was reserved in the organic phase by means of performing 4-stage washing with 5% sulfuric acid at an aqueous phase/organic phase ratio of 2:1. Therefore, scandium was separated from impurities and enriched into the organic phase. A strip liquor containing scandium was obtained by adding 0.2M HCl into the scandium-containing organic phase after purified at an aqueous phase/organic phase ratio of 1:1 for 2-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered, thereby scandium oxide with a purity of 99.9% was obtained.

Raffinate obtained after the step of extracting scandium was a purified solution containing nickel and cobalt without scandium, which can be used for producing metals of nickel and cobalt by extraction and separation with a solvent, electrolysis or other refining method.

### Example 3

The first leachate, of which contents of main elements are listed in Table 1, was adjusted to be of a pH value of 3.8 with an alkali solution, so as to obtain the Fe-Al slag from the first leachate, thereby to separate scandium from purities such as Fe and Al. A post-Fe-Al-precipitated solution was then adjusted to be of a pH value of 8.0, so as to precipitate nickel and cobalt as the Ni-Co hydroxide precipitate. Scandium was enriched along with the precipitation of the Ni-Co hydroxide precipitate. The Ni-Co hydroxide precipitate was of a scandium content of 0.139%.The contents of elements in the Ni-Co precipitation are listed in Table 3.

**Table 3 Contents of main elements in the Ni-Co hydroxide precipitation**

| Contents of main elements in the Ni-Co hydroxide precipitation (%) | | | | | | | |
|---|---|---|---|---|---|---|---|
| Sc | Ni | Co | Fe | Mn | Al | Ca | Cr |
| 0.139 | 42.1 | 3.45 | 0.17 | 6.9 | 0.058 | 0.11 | <0.005 |

The above Ni-Co hydroxide precipitate was added with a 20% (mass ratio) sulfuric acid at a solid-to-liquid ratio (S:L) of 1:5, so as to obtain third leachate after stirring, reacting, third leaching and filtering. The third leachate mainly included Ni, Co, Mn, Ca, Mg, Sc, Fe and Al.

The above third leachate containing Ni, Co, Mn, Ca, Mg, Sc, Fe and Al was adjusted to be of a pH value of 0.5, and then added with a kerosene solution containing 15% of P204 (bis-(2-ethylhexyl) phosphoric acid) and 5% of TBP (tributyl phosphate) at an aqueous phase/organic phase ratio of 5:1. Scandium was of an extraction percentage of 99.8%, Ni, Co, Fe and Al were of extraction percentages of 0.1%, 0.2%, 0.1% and 0%, respectively. Thus, impurities were separated from scandium due to their low extraction percentages. A small amount of Fe, Ni and Co extracted were washed off from the loaded organic phase, while Sc was reserved in the organic phase by means of performing 4-stage washing with 5% sulfuric acid at an aqueous phase/organic phase ratio of 2:1. Therefore, scandium was separated from impurities and enriched into the organic phase. A strip liquor containing scandium was obtained by adding 2M HCl into the scandium-containing organic phase after purified at an aqueous phase/organic phase ratio of 1:10 for 10-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered, thereby scandium oxide with a purity of 99.9% was obtained.

### Example 4

The first leachate, of which contents of main elements are listed in Table 1, was adjusted to be of a pH value of 4.5 with Ca(OH)2 at a temperature of 70 degrees Celsius, so as to obtain the first Fe-Al slag from the first leachate. Along with the co-precipitation of Al and Fe, the first Fe-Al slag was of a scandium content of 0.032%. Scandium was enriched as about ten times as compared with that in the laterite-nickel ore, and separated from nickel and cobalt simultaneously.

Raffinate obtained after the step of extracting scandium was a purified solution containing nickel and cobalt without scandium, which can be used for producing metals of nickel and cobalt by extraction and separation with a solvent, electrolysis or other refining method.

**Table 4 Contents of main elements in the first Fe-Al slag**

| Contents of main elements in the first Fe-Al slag (%) | | | | | | | | | | |
|---|---|---|---|---|---|---|---|---|---|---|
| Ni | Co | Al | Cr | Cu | Fe | Mg | Mn | Sc | Zn | Si |
| 0.416 | 0.041 | 2.536 | 0.049 | 0.03 | 8.919 | 0.01 | 0.247 | 0.032 | 0.05 | 3.6 |

The Fe-Al slag, of which contents of main elements are listed in Table 4, was subjected to second leaching with 2 mol/L sulfuric acid at a solid-to-liquid ratio (S: L) of 1:10, so as to obtain a second leachate after mixing, stirring and filtering. The second leachate mainly included iron, aluminum, and a small amount of Sc, Ni, Ca and Mn. Analysis data for the second leachate is shown in Table 5.

**Table 5 Concentrations of elements in the second leachate**

| Concentrations of elements in the second leachate (g/L) | | | | | |
|---|---|---|---|---|---|
| Al | Ca | Fe | Mn | Ni | Sc |
| 5.269 | 0.699 | 8.262 | 0.0416 | 0.657 | 0.0344 |

The second leachate was extracted with 5% Cyanex272 (bis-(2,4,4-trimethyl pentyl) phosphinic acid) + 1% TBP (tributyl phosphate) as the organic phase, at an aqueous phase/organic phase ratio of 10:1 and of a pH value of 0.2. The extracting rate of scandium was up to 96.53%. The extracting rates of scandium and other metals from the second leachate are listed in Table 6.

**Table 6 Extracting rates of scandium and other metals from the second leachate**

| Extracting rates (%) | | | | | |
|---|---|---|---|---|---|
| Al | Ca | Fe | Mn | Ni | Sc |
| 0.5 | 3.40 | 1.28 | 2.41 | 1.34 | 96.53 |

It can be seen from that scandium is of a higher extracting rate than other metals (as impurities), thereby to scandium can be separated from the impurities. A small amount of Fe, Ni and Co extracted were washed off from the loaded organic phase, while Sc was reserved in the organic phase by means of performing 4-stage washing with 5% sulfuric acid at an aqueous phase/organic phase ratio of 2:1. Therefore, scandium was separated from impurities and enriched into the organic phase.

A strip liquor containing scandium was obtained by adding M HCl into the scandium-containing organic phase after purified at an aqueous phase/organic phase ratio of 1:3 for 3-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered, thereby scandium oxide with a purity of 99.9% was obtained.

### Example 5

The second leachate, of which contents of main elements are listed in Table 1, was adjusted to be of a pH value of 3.0, and then added with a kerosene solution containing 15% (v/v) carboxylic acid extractant CA12 (2-octylphenoxy acetic acid) at an aqueous phase/organic phase ratio of 5:1 for 10-stage extraction. Scandium was of an extraction percentage of 95.5 %, Fe was of an extraction percentage of 37.5%, Ni and Co were of extraction percentages close to 0%, Mn was of an extraction percentage of 0.2%, and Mg was of an extraction percentage of 0.5%. A small amount of Fe, Ni, Co, Mn and Mg extracted were washed off from the loaded organic phase, while Sc was reserved in the organic phase by means of performing 20-stage washing with 0.02 mol/L sulfuric acid at an aqueous phase/organic phase ratio of 1:1. Therefore, scandium was separated from impurities and enriched into the organic phase. A strip liquor containing scandium was obtained by adding 0.2M HCl into the scandium-containing organic phase after purified at an aqueous phase/organic phase ratio of 1:5 for 10-stage back-extraction.

The strip liquor containing scandium was added with 2.5 mol/L of oxalic acid to precipitate scandium as scandium oxalate. The precipitate was calcined for 4 hours at a temperature of 750 degrees Celsius after filtered; thereby scandium oxide with a purity of 99.8% was obtained.

### Example 6

The Ni-Co hydroxide precipitate, of which contents of main elements are listed in Table 2, was subjected to third leaching by adding 10% (mass ratio) sulfuric acid solution therein at a solid-to-liquid ratio (S: L) of 1:10, so as to third leachate after stirring and reacting for 3 hours. The third leachate mainly contained Ni, Co, Mn, Sc, Fe, Al and Ca. The third leachate was adjusted to be of a pH value of 4.8 at a temperature of 70 degrees Celsius, so as to obtain a second Fe-Al slag after filtering. The contents of main components in the second Fe-Al slag were analyzed shown in Table 7.

**Table 7 Contents of main elements in the second Fe-Al slag**

| Contents of main elements in the Fe-Al slag (%) | | | | | | | | | | |
|---|---|---|---|---|---|---|---|---|---|---|
| Sc | Ni | Co | Fe | Mn | Al | Ca | Si | Mg | Ca | Pb |
| 1.14 | 12.53 | 0.9 | 2.36 | 0.69 | 0.98 | 0.043 | 14.69 | 0.039 | 0.043 | <0.005 |

The Fe-Al slag was of a scandium content of 1.14%, as about 15 times as compared with that in the Ni-Co hydroxide precipitate, and as about 345 times as compared with that in the laterite-nickel ore. The second Fe-Al slag was subjected to leaching with 10% (mass percentage) sulfuric acid at a solid-to-liquid ratio (S:L) of 1:10, so as to obtain leachate after stirring and reacting for 2 hours and filtering.

The obtained leachate was adjusted to be of a pH value of 0.5, and then added with a kerosene solution containing 10% N235 (3-octyl tertiary amine) and 5% N503 (N,N 2-(1- heptyl methyl) acetamide) at an aqueous phase/organic phase ratio of 5:1 for 10-stage extraction. Scandium was of an extraction percentage of 99.8 %, Ni, Co, Fe and Al were of extraction percentages of 0.15%, 0.2%, 5.0% and 0.2%, respectively. A small amount of Fe, Ni and Co extracted were washed off from the loaded organic phase, while Sc was reserved in the organic phase by means of performing 5-stage washing with 5% sulfuric acid at an aqueous phase/organic phase ratio of 2:1. Therefore, scandium was separated from impurities and enriched into the organic phase. A strip liquor containing scandium was obtained by adding 0.2M HCl into the scandium-containing organic phase after purified at an aqueous phase/organic phase ratio of 1:1 for 2-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered; thereby scandium oxide with a purity of 99.9% was obtained.

After filtering out the second Fe-Al slag, the purified solution containing nickel and cobalt without iron and Si was refined by hydrometallurgical procedures (such as extraction and separation with a solvent and electrolysis), so as to obtain metals like nickel and cobalt.

### Example 7

The contents of main elements of second Fe-Al slag are listed in Table 7. The Ni-Co hydroxide precipitate was subjected to third leaching by adding 10% (mass ratio) sulfuric acid therein at a solid-to-liquid ratio (S: L) of 1:10, so as to third leachate after stirring and reacting for 3 hours. The third leachate mainly contained Ni, Co, Mn, Sc, Fe, Al and Ca. The third leachate was adjusted to be of a pH value of 5.5 at a temperature of 70 degrees Celsius, so as to obtain a second Fe-Al slag after filtering.

The second Fe-Al slag was subjected to leaching with 10% (mass percentage) sulfuric acid at a solid-to-liquid ratio (S:L) of 1:10, so as to obtain leachate after stirring and reacting for 2 hours and filtering.

The obtained leachate was adjusted to be of a pH value of 0.5, and then added with a kerosene solution containing 10% P204 (bis-(2-ethylhexyl) phosphoric acid) at an aqueous phase/organic phase ratio of 5:1 for extraction. Scandium was of an extraction percentage of 99.8 %, Ni, Co, Fe and Al were of extraction percentages of 0.1%, 0.15%, 0.8% and 0%, respectively. A small amount of Fe, Ni and Co extracted were washed off from the loaded organic phase, while Sc was reserved in the organic phase by means of performing 5-stage washing with 5% sulfuric acid at an aqueous phase/organic phase ratio of 5:1. Therefore, scandium was separated from impurities and enriched into the organic phase. A strip liquor containing scandium was obtained by adding 1M HCl into the scandium-containing organic phase after purified at an aqueous phase/organic phase ratio of 1:5 for 10-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered; thereby scandium oxide with a purity of 99.9% was obtained.

### Example 8

The contents of elements in a laterite-nickel ore are listed in Table 1. The contents of Fe, Al, Mg, Ni, Mn, Ca and Sc are 41.9%, 1.83%, 1.98%, 1.07%, 0.65%, 0.18% and 0.0033%, respectively. The laterite-nickel ore was subjected to first leaching with a sulfuric acid at a high temperature, so as to obtain first leachate, of which contents of main elements are shown in Table 1.

The first leachate was adjusted to be of a pH value of 3.5, and then added with a kerosene solution containing 5% (v/v) carboxylic acid extractant CA12 (2-octylphenoxy acetic acid) at an aqueous phase/organic phase ratio of 5:1 for 5-stage extraction. Scandium was of an extraction percentage of 98.5 %, Fe was of an extraction percentage of 25%, Ni and Co were of extraction percentages close to 0, Mn was of an extraction percentage of 0.15%, and Mg was of an extraction percentage of 0.46%. A small amount of Fe, Ni, Co, Mn and Mg extracted were washed off from the loaded organic phase, while Sc was reserved in the organic phase by means of performing 15-stage washing with 0.01 M sulfuric acid at an aqueous phase/organic phase ratio of 1:2. Therefore, scandium was separated from impurities and enriched into the organic phase. A strip liquor containing scandium was obtained by adding 0.5M HCl into the scandium-containing organic phase after purified at an aqueous phase/organic phase ratio of 1:10 for 5-stage back-extraction.

The strip liquor containing scandium was added with 1 mol/L of oxalic acid to precipitate scandium as scandium oxalate. The precipitate was calcined for 4 hours at a temperature of 750 degrees Celsius after filtered; thereby scandium oxide with a purity of 99.8% was obtained.

Raffinate obtained after the step of extracting scandium was a purified solution containing nickel and cobalt without scandium, which can be used for producing metals of nickel and cobalt by extraction and separation with a solvent, electrolysis or other refining method.

### Example 9

2.0 L of the first leachate (shown as Table 1) was adjusted to be of a pH value of 0.2, and then added with 200 mL of kerosene solution containing 53% P204(bis-(2-ethylhexyl) phosphoric acid)-1%TBP (tributyl phosphate) for 10 min of extraction by mixing and stirring. Scandium was of an extraction percentage of 99.5 %, Ca, Mg, Mn, Ni, Fe and Al were of extraction percentages lower than 10%. The extracting rates of elements from the first leachate are listed in Table 8.

**Table 8 Extracting rates of elements from the first leachate**

| Extracting rates % | | | | | | |
|---|---|---|---|---|---|---|
| Fe | Al | Ni | Ca | Mg | Mn | Sc |
| 6.15 | 9.05 | 1.03 | 0 | 2.07 | 3.70 | 99.5 |

A small amount of Fe, Al, Ni, Ca, Mg and Mn extracted were washed off from the loaded organic phase, while Sc was reserved in the organic phase by means of performing 2-stage washing with 0.1 M sulfuric acid at an aqueous phase/organic phase ratio of 1:1. Therefore, scandium was separated from impurities and enriched into the organic phase. A strip liquor containing scandium was obtained by adding 1M HCl into the scandium-containing organic phase after purified at an aqueous phase/organic phase ratio of 1:10 for 10-stage back-extraction.

The strip liquor containing scandium was added with 3 mol/L of oxalic acid to precipitate scandium as scandium oxalate. The precipitate was calcined for 1 hour at a temperature of 800 degrees Celsius after filtered; thereby scandium oxide with a purity of 99.8% was obtained.

### Example 10

2.0 L of the first leachate containing 3.3mg/L Sc, 0.26g/L Fe, 0.15g/L Ca, 1.45g/L Mg, 0.81g/L Mn, 1.24g/L Ni and 0.12 g/L Co was added with 100mL of a sulfonated kerosene organic solution containing 5% N235 (3-octyl tertiary amine) and 1% N503 (N,N 2-(1-heptyl methyl) acetamide) for 2 min of extraction by mixing and stirring. Scandium was of an extraction percentage of 98.0%, Fe, Al, Ca, Mg, Mn, Ni and Co were of extraction percentages of 8.5%, 3.2%, 1.2%, 1.0%, 0.2%, 0.1% and 0.15%, respectively

A small amount of Fe, Al, Ca, Mg, Mn, Ni and Co extracted were washed off from the loaded organic phase, while Sc was reserved in the organic phase by means of performing 5-stage washing with 0.2 M sulfuric acid at an aqueous phase/organic phase ratio of 1:1. Therefore, scandium was separated from impurities and enriched into the organic phase.

A strip liquor containing scandium was obtained by adding 0.5M HCl into the scandium-containing organic phase after purified at an aqueous phase/organic phase ratio of 1:2 for 2-stage back-extraction.

The strip liquor containing scandium was added with 3 mol/L of oxalic acid to precipitate scandium as scandium oxalate. The precipitate was calcined for 1 hour at a temperature of 800 degrees Celsius after filtered; thereby scandium oxide with a purity of 99.9% was obtained.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure.

## Claims

1. A method for recycling scandium, comprising steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein
the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution; and
subjecting the first Fe-Al slag to second leaching, so as to obtain the scandium-containing leachate.

2. A method for recycling scandium, comprising steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein
the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution;
subjecting the first post-Fe-Al-precipitated solution to nickel-cobalt (Ni-Co) precipitation, so as to obtain a Ni-Co hydroxide precipitate; and
subjecting the Ni-Co hydroxide precipitate to third leaching, so as to obtain the scandium-containing leachate.

3. A method for recycling scandium, comprising steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein
the scandium-containing leachate is obtained by steps of:
subjecting a laterite-nickel ore to first leaching, so as to obtain a first leachate;
subjecting the first leachate to first iron-aluminum (Fe-Al) precipitation and nickel-cobalt (Ni-Co) precipitation, so as to obtain a first Fe-Al slag and a Ni-Co hydroxide precipitate; and
subjecting the first Fe-Al slag and the Ni-Co hydroxide precipitate to fourth leaching, so as to obtain the scandium-containing leachate.

4. A method for recycling scandium, comprising steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein
the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution;
subjecting the first post-Fe-Al-precipitated solution to nickel-cobalt (Ni-Co) precipitation, so as to obtain a Ni-Co hydroxide precipitate;
subjecting the Ni-Co hydroxide precipitate to third leaching, so as to obtain a leachate containing nickel and cobalt;
subjecting the leachate containing nickel and cobalt to second iron-aluminum (Fe-Al) precipitation, so as to obtain a second Fe-Al slag; and
subjecting the second Fe-Al slag to fifth leaching, so as to obtain the scandium-containing leachate.

5. A method for recycling scandium, comprising steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide,
wherein
the scandium-containing leachate is obtained by steps of:
subjecting a laterite-nickel ore to first leaching, so as to obtain a first leachate;
subjecting the first leachate to first iron-aluminum (Fe-Al) precipitation, so as to obtain a first Fe-Al slag and a first post-Fe-Al-precipitated solution;
subjecting the first post-Fe-Al-precipitated solution to nickel-cobalt (Ni-Co) precipitation, so as to obtain a Ni-Co hydroxide precipitate;
subjecting the Ni-Co hydroxide precipitate to third leaching, so as to obtain a leachate containing nickel and cobalt;
subjecting the leachate containing nickel and cobalt to second iron-aluminum (Fe-Al) precipitation, so as to obtain a second Fe-Al slag; and
subjecting the first and second Fe-Al slags to sixth leaching, so as to obtain the scandium-containing leachate.

6. The method according to anyone of claims 1 to 5, wherein the organic extractant is at least one selected from an organic phosphoric acid extractant, a neutral phosphorus extractant, an organic carboxylic acid extractant, an organic amine extractant and an organic chelate extractant.

7. The method according to claim 6, wherein the organic phosphoric acid extractant is at least one of bis(2-ethylhexyl) phosphoric acid (P204) and bis(2,4,4-trimethyl pentyl) phosphinic acid (Cyanex272); the neutral phosphorus extractant is tributyl phosphate (TBP); the organic carboxylic acid extractant is at least one selected from naphthenic acid or 2-octylphenoxy acetic acid (CA12); the organic amine extractant is 3-octyl tertiary amine (N235); and the organic chelate extractant is N,N-bis(1-heptyl methyl) acetamide (N503).

8. The method according to anyone of claims 1 to 5, wherein the monovalent acid is hydrochloric acid or nitric acid.

9. The method according to anyone of claims 1 to 5, wherein the monovalent acid is of a concentration of 0.01mol/L to 5 mol/L.

10. The method according to anyone of claims 1 to 5, wherein the precipitant is at least one selected from sodium hydroxide, ammonium hydroxide, sodium carbonate, sodium bicarbonate and oxalic acid; and the precipitant is of a concentration of 0.1 mol/L to 5 mol/L.

11. The method according to anyone of claims 1 to 5, wherein the scandium-containing precipitate is calcined for 1 h to 6 h at a temperature of 700 degrees Celsius to 900 degrees Celsius.

12. The method according to any one of claims 2 to 5, wherein prior to the step of third leaching, the Ni-Co hydroxide precipitate is subjected to pulping, so as to obtain a Ni-Co hydroxide pulp and subject the Ni-Co hydroxide pulp to the third leaching.

13. The method according to claim 12, wherein the Ni-Co hydroxide pulp is of a solid-to-liquid ratio of (1:20) to (1:1).

## Patentansprüche

1. Verfahren zum Recycling von Scandium, umfassend die Schritte von:
Extrahieren von Scandium aus Scandium-enthaltendem Auslaugungs-Produkt mit einem organischen Extraktionsmittel, um so eine Scandium-enthaltende organische Phase zu erhalten;
Unterziehen der Scandium-enthaltenden organischen Phase einer Rückextraktion mit einer einwertigen Säure, um so eine Abstreifflüssigkeit zu erhalten;
Mischen der Abstreifflüssigkeit mit einem Fällungsmittel, um einen Scandium-enthaltenden Niederschlag zu erhalten;
und
Kalzinieren des Scandium-enthaltenden Niederschlags, um so Scandiumoxid zu erhalten,
wobei
das Scandium-enthaltende Auslaugungs-Produkt durch Schritte erhalten wird von:
Unterziehen eines Laterit-Nickel-Erzes einer ersten Auslaugung, um ein erstes Auslaugungs-Produkt zu erhalten;
Unterziehen des ersten Auslaugungs-Produkts einer ersten Eisen-Aluminium-(Fe-Al)-Fällung, um so eine erste Fe-Al-Schlacke und eine erste Lösung nach Fällen von Fe-Al zu erhalten; und
Unterziehen der ersten Fe-Al-Schlacke einer zweiten Auslaugung, um so das Scandium-enthaltende Auslaugungs-Produkt zu erhalten.

2. Verfahren zum Recycling von Scandium, umfassend die Schritte von:
Extrahieren von Scandium aus Scandium-enthaltendem Auslaugungs-Produkt mit einem organischen Extraktionsmittel, um so eine Scandium-enthaltende organische Phase zu erhalten;
Unterziehen der Scandium-enthaltenden organischen Phase einer Rückextraktion mit einer einwertigen Säure, um so eine Abstreifflüssigkeit zu erhalten;
Mischen der Abstreifflüssigkeit mit einem Fällungsmittel, um so einen Scandium-enthaltenden Niederschlag zu erhalten;
und
Kalzinieren des Scandium-enthaltenden Niederschlags, um so Scandiumoxid zu erhalten,
wobei
das Scandium-enthaltende Auslaugungs-Produkt erhalten wird durch die Schritte von:
Unterziehen eines Laterit-Nickel-Erzes einer ersten Auslaugung, um so ein erstes Auslaugungs-Produkt zu erhalten;
Unterziehen des ersten Auslaugungs-Produkts erster Eisen-Aluminium (Fe-Al)-Fällung, um so eine erste Fe-Al-Schlacke und eine erste Lösung nach Fällen von Fe-Al zu erhalten;
Unterziehen der ersten Lösung nach Fällen von Fe-Al einer Nickel-Kobalt (Ni-Co)-Ausfällung, um so einen Ni-Co-Hydroxid-Niederschlag zu erhalten; und
Unterziehen des Ni-Co-Hydroxid-Niederschlags einer dritten Auslaugung, um das Scandium-enthaltende Auslaugungs-Produkt zu erhalten.

3. Verfahren zum Recycling von Scandium, umfassend die Schritte von:
Extrahieren von Scandium aus Scandium-enthaltendem Auslaugungs-Produkt mit einem organischen Extraktionsmittel, um so eine Scandium-enthaltende organische Phase zu erhalten;
Unterziehen der Scandium-enthaltenden organischen Phase einer Rückextraktion mit einer einwertigen Säure, um so eine Abstreifflüssigkeit zu erhalten;
Mischen der Abstreifflüssigkeit mit einem Fällungsmittel, um so einen Scandium-enthaltenden Niederschlag zu erhalten;
und
Kalzinieren des Scandium-enthaltenden Niederschlags, um so Scandiumoxid zu erhalten,
wobei
das Scandium-enthaltende Auslaugungs-Produkt erhalten wird durch die Schritte von:
Unterziehen eines Laterit-Nickel-Erzes einer ersten Auslaugung, um so ein erstes Auslaugungs-Produkt zu erhalten;
Unterziehen des ersten Auslaugungs-Produkts einer ersten Eisen-Aluminium-(Fe-Al)-Fällung und einer Nickel-Kobalt-(Ni-Co)-Fällung, um so eine erste Fe-Al-Schlacke und einen Ni-Co-Hydroxid-Niederschlag zu erhalten; und
Unterziehen der ersten Fe-Al-Schlacke und des Ni-Co-Hydroxid-Niederschlags einer vierten Auslaugung, um so das Scandium-enthaltende Auslaugungs-Produkt zu erhalten.

4. Verfahren zum Recycling von Scandium, umfassend die Schritte von:
Extrahieren von Scandium aus Scandium-enthaltendem Auslaugungs-Produkt mit einem organischen Extraktionsmittel, um so eine Scandium-enthaltende organische Phase zu erhalten;
Unterziehen der Scandium-enthaltenden organischen Phase einer Rückextraktion mit einer einwertigen Säure, um so eine Abstreifflüssigkeit zu erhalten;
Mischen der Abstreifflüssigkeit mit einem Fällungsmittel, um so einen Scandium-enthaltenden Niederschlag zu erhalten;
und
Kalzinieren des Scandium-enthaltenden Niederschlags, um so Scandiumoxid zu erhalten,
wobei
das Scandium-enthaltende Auslaugungs-Produkt durch Schritte erhalten wird von:
Unterziehen eines Laterit-Nickel-Erzes einer ersten Auslaugung, um so ein erstes Auslaugungs-Produkt zu erhalten;
Unterziehen des ersten Auslaugungs-Produkts einer ersten Eisen-Aluminium-(Fe-Al)-Fällung, um so eine erste Fe-Al-Schlacke und eine erste Lösung nach Fällen von Fe-Al zu erhalten;
Unterziehen der ersten Lösung nach Fällen von Fe-Al einer Nickel-Kobalt (Ni-Co)-Fällung, um so einen Ni-Co-Hydroxid-Niederschlag zu erhalten;
Unterziehen des Ni-Co-Hydroxid-Niederschlags einer dritten Auslaugung, um so ein Auslaugungs-Produkt zu erhalten, das Nickel und Kobalt enthält;
Unterziehen des Nickel und Kobalt enthaltenden Auslaugungs-Produkts einer zweiten Eisen-Aluminium-(Fe-Al)-Fällung, um so eine zweite Fe-Al-Schlacke zu erhalten; und
Unterziehen der zweiten Fe-Al-Schlacke einer fünften Auslaugung, um so das Scandium-enthaltende Auslaugungs-Produkt zu erhalten.

5. Verfahren zum Recycling von Scandium, umfassend die Schritte von:
Extrahieren von Scandium aus Scandium-enthaltendem Auslaugungs-Produkt mit einem organischen Extraktionsmittel, um so eine Scandium-enthaltende organische Phase zu erhalten;
Unterziehen der Scandium-enthaltenden organischen Phase einer Rückextraktion mit einer einwertigen Säure, um so eine Abstreifflüssigkeit zu erhalten;
Mischen der Abstreifflüssigkeit mit einem Fällungsmittel, um so einen Scandium-enthaltenden Niederschlag zu erhalten;
und
Kalzinieren des Scandium-enthaltenden Niederschlags, um so Scandiumoxid zu erhalten,
wobei
das Scandium-enthaltende Auslaugungs-Produkt durch Schritte erhalten wird von:
Unterziehen eines Laterit-Nickel-Erzes einer ersten Auslaugung, um so ein erstes Auslaugungs-Produkt zu erhalten;
Unterziehen des ersten Auslaugungs-Produkts einer ersten Eisen-Aluminium-(Fe-Al)-Fällung, um so eine erste Fe-Al-Schlacke und eine erste Lösung nach Fällen von Fe-Al zu erhalten;
Unterziehen der ersten Lösung nach Fällen von Fe-Al einer Nickel-Kobalt (Ni-Co)-Ausfällung, um so einen Ni-Co-Hydroxid-Niederschlag zu erhalten;
Unterziehen des Ni-Co-Hydroxid-Niederschlags einer dritten Auslaugung, um so ein Auslaugungs-Produkt zu erhalten, das Nickel und Kobalt enthält;
Unterziehen des Nickel und Kobalt enthaltenden Auslaugungs-Produkts einer zweiten Eisen-Aluminium-(Fe-Al)-Fällung, um so eine zweite Fe-Al-Schlacke zu erhalten; und
Unterziehen der ersten und zweiten Fe-Al-Schlacken einer sechsten Auslaugung, um so das Scandium-enthaltende Auslaugungs-Produkt zu erhalten.

6. Verfahren nach einem der Ansprüche 1 bis 5, wobei das organische Extraktionsmittel mindestens eines ist, ausgewählt aus einem organischen Phosphorsäure-Extraktionsmittel, einem neutralen Phosphor-Extraktionsmittel, einem organischen Carbonsäure-Extraktionsmittel, einem organischen Amin-Extraktionsmittel und einem organischen Chelat-Extraktionsmittel.

7. Verfahren nach Anspruch 6, wobei das organische Phosphorsäure-Extraktionsmittel mindestens eines von Bis-(2-ethylhexyl)-phosphorsäure (P204) und Bis-(2,4,4-trime-thylpentyl)-phosphinsäure (Cyanex272) ist; das neutrale Phosphor-Extraktionsmittel Tributylphosphat (TBP) ist; das organische Carbonsäure-Extraktionsmittel mindestens eines ist, ausgewählt aus Naphthensäure oder 2-Octylphenoxy-Essigsäure (CA12); das organische Amin-Extraktionsmittel 3-Octyl-tertiäres Amin (N235) ist und das organische Chelat-Extraktionsmittel N,N-Bis-(1-heptylme-thyl)-acetamid (N503) ist.

8. Verfahren nach einem der Ansprüche 1 bis 5, wobei die einwertige Säure Salzsäure oder Salpetersäure ist.

9. Verfahren nach einem der Ansprüche 1 bis 5, wobei die einwertige Säure eine Konzentration von 0,01 Mol/l bis 5 Mol/l aufweist.

10. Verfahren nach einem der Ansprüche 1 bis 5, wobei das Fällungsmittel mindestens eines ist, ausgewählt aus Natriumhydroxid, Ammoniumhydroxid, Natriumcarbonat, Natriumbicarbonat und Oxalsäure; und das Fällungsmittel eine Konzentration von 0,1 Mol/l bis 5 Mol/l aufweist.

11. Verfahren nach einem der Ansprüche 1 bis 5, wobei der Scandium-enthaltende Niederschlag für 1 h bis 6 h bei einer Temperatur von 700 Grad Celsius bis 900 Grad Celsius kalziniert wird.

12. Verfahren nach einem der Ansprüche 2 bis 5, wobei vor dem Schritt der dritten Auslaugung der Ni-Co-Hydroxid-Niederschlag einem Pulping unterzogen wird, um so eine Ni-Co-Hydroxid-Pulpe zu erhalten und die Ni-Co-Hydroxid-Pulpe der dritten Auslaugung unterzogen wird.

13. Verfahren nach Anspruch 12, wobei die Ni-Co-Hydroxid-Pulpe ein Feststoff-zu-Flüssigkeits-Verhältnis von (1:20) bis (1:1) aufweist.

## Revendications

1. Procédé pour recycler du scandium, comprenant les étapes suivantes :
extraction de scandium à partir d'un lixiviat contenant du scandium avec un agent d'extraction organique, de façon à obtenir une phase organique contenant du scandium ;
soumission de la phase organique contenant du scandium à une réextraction avec un acide monovalent, de façon à obtenir une liqueur d'extraction ;
mélange de la liqueur d'extraction avec un agent de précipitation, de façon à obtenir un précipité contenant du scandium ; et
calcination du précipité contenant du scandium, de façon à obtenir de l'oxyde de scandium,
dans lequel
le lixiviat contenant du scandium est obtenu par les étapes suivantes :
soumission d'un minerai de latérite-nickel à une première lixiviation, de façon à obtenir un premier lixiviat ;
soumission du premier lixiviat à une première précipitation de fer-aluminium (Fe-Al), de façon à obtenir un premier laitier de Fe-Al et une première solution post-précipitation de Fe-Al ; et
soumission du premier laitier de Fe-Al à une deuxième lixiviation, de façon à obtenir le lixiviat contenant du scandium.

2. Procédé pour recycler du scandium, comprenant les étapes suivantes :
extraction de scandium à partir d'un lixiviat contenant du scandium avec un agent d'extraction organique, de façon à obtenir une phase organique contenant du scandium ;
soumission de la phase organique contenant du scandium à une réextraction avec un acide monovalent, de façon à obtenir une liqueur d'extraction ;
mélange de la liqueur d'extraction avec un agent de précipitation, de façon à obtenir un précipité contenant du scandium ; et
calcination du précipité contenant du scandium, de façon à obtenir de l'oxyde de scandium,
dans lequel
le lixiviat contenant du scandium est obtenu par les étapes suivantes :
soumission d'un minerai de latérite-nickel à une première lixiviation, de façon à obtenir un premier lixiviat ;
soumission du premier lixiviat à une première précipitation de fer-aluminium (Fe-Al), de façon à obtenir un premier laitier de Fe-Al et une première solution post-précipitation de Fe-Al ;
soumission de la première solution post-précipitation de Fe-Al à une précipitation de nickel-cobalt (Ni-Co), de façon à obtenir un précipité d'hydroxyde de Ni-Co ; et
soumission du précipité d'hydroxyde de Ni-Co à une troisième lixiviation, de façon à obtenir le lixiviat contenant du scandium.

3. Procédé pour recycler du scandium, comprenant les étapes suivantes :
extraction de scandium à partir d'un lixiviat contenant du scandium avec un agent d'extraction organique, de façon à obtenir une phase organique contenant du scandium ;
soumission de la phase organique contenant du scandium à une réextraction avec un acide monovalent, de façon à obtenir une liqueur d'extraction ;
mélange de la liqueur d'extraction avec un agent de précipitation, de façon à obtenir un précipité contenant du scandium ; et
calcination du précipité contenant du scandium, de façon à obtenir de l'oxyde de scandium,
dans lequel
le lixiviat contenant du scandium est obtenu par les étapes suivantes :
soumission d'un minerai de latérite-nickel à une première lixiviation, de façon à obtenir un premier lixiviat ;
soumission du premier lixiviat à une première précipitation de fer-aluminium (Fe-Al) et à une précipitation de nickel-cobalt (Ni-Co), de façon à obtenir un premier laitier de Fe-Al et un précipité d'hydroxyde de Ni-Co ; et
soumission du premier laitier de Fe-Al et du précipité d'hydroxyde de Ni-Co à une quatrième lixiviation, de façon à obtenir le lixiviat contenant du scandium.

4. Procédé pour recycler du scandium, comprenant les étapes suivantes :
extraction de scandium à partir d'un lixiviat contenant du scandium avec un agent d'extraction organique, de façon à obtenir une phase organique contenant du scandium ;
soumission de la phase organique contenant du scandium à une réextraction avec un acide monovalent, de façon à obtenir une liqueur d'extraction ;
mélange de la liqueur d'extraction avec un agent de précipitation, de façon à obtenir un précipité contenant du scandium ; et
calcination du précipité contenant du scandium, de façon à obtenir de l'oxyde de scandium,
dans lequel
le lixiviat contenant du scandium est obtenu par les étapes suivantes :
soumission d'un minerai de latérite-nickel à une première lixiviation, de façon à obtenir un premier lixiviat ;
soumission du premier lixiviat à une première précipitation de fer-aluminium (Fe-Al), de façon à obtenir un premier laitier de Fe-Al et une première solution post-précipitation de Fe-Al ;
soumission de la première solution post-précipitation de Fe-Al à une précipitation de nickel-cobalt (Ni-Co), de façon à obtenir un précipité d'hydroxyde de Ni-Co ;
soumission du précipité d'hydroxyde de Ni-Co à une troisième lixiviation, de façon à obtenir un lixiviat contenant du nickel et du cobalt ;
soumission du lixiviat contenant du nickel et du cobalt à une deuxième précipitation de fer-aluminium (Fe-Al), de façon à obtenir un deuxième laitier de Fe-Al ; et
soumission du deuxième laitier de Fe-Al à une cinquième lixiviation, de façon à obtenir le lixiviat contenant du scandium.

5. Procédé pour recycler du scandium, comprenant les étapes suivantes :
extraction de scandium à partir d'un lixiviat contenant du scandium avec un agent d'extraction organique, de façon à obtenir une phase organique contenant du scandium ;
soumission de la phase organique contenant du scandium à une réextraction avec un acide monovalent, de façon à obtenir une liqueur d'extraction ;
mélange de la liqueur d'extraction avec un agent de précipitation, de façon à obtenir un précipité contenant du scandium ; et
calcination du précipité contenant du scandium, de façon à obtenir de l'oxyde de scandium,
dans lequel
le lixiviat contenant du scandium est obtenu par les étapes suivantes :
soumission d'un minerai de latérite-nickel à une première lixiviation, de façon à obtenir un premier lixiviat ;
soumission du premier lixiviat à une première précipitation de fer-aluminium (Fe-Al), de façon à obtenir un premier laitier de Fe-Al et une première solution post-précipitation de Fe-Al ;
soumission de la première solution post-précipitation de Fe-Al à une précipitation de nickel-cobalt (Ni-Co), de façon à obtenir un précipité d'hydroxyde de Ni-Co ;
soumission du précipité d'hydroxyde de Ni-Co à une troisième lixiviation, de façon à obtenir le lixiviat contenant du nickel et du cobalt ;
soumission du lixiviat contenant du nickel et du cobalt à une deuxième précipitation de fer-aluminium (Fe-Al), de façon à obtenir un deuxième laitier de Fe-Al ; et
soumission des premier et deuxième laitiers de Fe-Al à une sixième lixiviation, de façon à obtenir le lixiviat contenant du scandium.

6. Procédé selon l'une quelconque des revendications 1 à 5, dans lequel l'agent d'extraction organique est au moins l'un choisi parmi un agent d'extraction de type acide phosphorique organique, un agent d'extraction de type phosphore neutre, un agent d'extraction de type acide carboxylique organique, un agent d'extraction de type amine organique et un agent d'extraction de type chélate organique.

7. Procédé selon la revendication 6, dans lequel l'agent d'extraction de type acide phosphorique organique est au moins l'un parmi l'acide bis(2-éthylhexyl)phosphorique (P204) et l'acide bis(2,4,4-triméthylpentyl)phosphinique (Cyanex272) ; l'agent d'extraction de type phosphore neutre est le phosphate de tributyle (TBP) ; l'agent d'extraction de type acide carboxylique organique est au moins l'un choisi parmi l'acide naphténique et l'acide 2-octylphénoxyacétique (CA12) ; l'agent d'extraction de type amine organique est la 3-octyl-tert-amine (N235) ; et l'agent d'extraction de type chélate organique est le N,N-bis(1-heptylméthyl)acétamide (N503).

8. Procédé selon l'une quelconque des revendications 1 à 5, dans lequel l'acide monovalent est l'acide chlorhydrique ou l'acide nitrique.

9. Procédé selon l'une quelconque des revendications 1 à 5, dans lequel l'acide monovalent est à une concentration de 0,01 mol/l à 5 mol/l.

10. Procédé selon l'une quelconque des revendications 1 à 5, dans lequel l'agent de précipitation est au moins l'un choisi parmi l'hydroxyde de sodium, l'hydroxyde d'ammonium, le carbonate de sodium, le bicarbonate de sodium et l'acide oxalique ; et l'agent de précipitation est à une concentration de 0,1 mol/l à 5 mol/l.

11. Procédé selon l'une quelconque des revendications 1 à 5, dans lequel le précipité contenant du scandium est calciné pendant 1 heure à 6 heures à une température de 700°C à 900°C.

12. Procédé selon l'une quelconque des revendications 2 à 5, dans lequel, avant l'étape de la troisième lixiviation, le précipité d'hydroxyde de Ni-Co est soumis à un repulpage, de façon à obtenir une pulpe d'hydroxyde de Ni-Co, et la pulpe d'hydroxyde de Ni-Co est soumise à la troisième lixiviation.

13. Procédé selon la revendication 12, dans lequel la pulpe d'hydroxyde de Ni-Co est à un rapport solide/liquide de (1/20) à (1/1).
